# EUROPEAN PATENT SPECIFICATION

(11) **EP 2 160 939 B1**
(45) Date of publication and mention of the grant of the patent: **23.04.2014**
(21) Application number: 09010154.4
(22) Date of filing: 06.08.2009
(51) Int. Cl.: A01F 15/07

(54) **Bale wrapper**
Ballenwickler
Enrubanneuse

(30) Priority: 26.08.2008 GB 0815486
(43) Date of publication of application: 10.03.2010
(73) Proprietor: Kuhn-Geldrop B.V., 5667 KP Geldrop (NL)
(72) Inventor: van Amstel, Leonardus, Hendrikus, Maria, 5663 R W Geldrop (NL); van De Walle, Jacobus, Izaak, 56674 SM Nuenen (NL)
(74) Representative: Raynor, Simon Mark

(56) References cited:
- EP-A- 0 234 763
- EP-A- 0 336 739
- WO-A-98/44776
- WO-A-2006/093374
- GB-A- 2 275 037
- US-B1- 6 679 035

## Description

The present invention relates to a bale wrapper apparatus for applying stretch film wrapping to the outer surface of an agricultural bale.

A bale wrapper apparatus according to the invention maybe either an independently operated machine (which carries out bale wrapping only), or it may be incorporated within a combined baler and wrapper machine.

It is well known to apply stretch film wrapping to agricultural bales, in order to protect the contents of the bale from the weather and, in the case of silage crops, to form a substantially air and watertight enclosure within which the crop can mature or ferment to form silage.

The bale can be either cylindrical (called a "circular" bale) or it can be a parallelepiped (called a "rectangular" bale). In either case, the bale is generally wrapped by rotating the bale around a horizontal axis while at the same time providing relative rotation about a vertical axis between the bale and a dispenser of the wrapping film. This produces a series of overlapping layers, which cover the entire outer surface of the bale to form an air and watertight enclosure. Generally, multiple layers of film are applied to increase the puncture-resistance of the wrapper and improve its airtight properties.

There are two main types of bale wrapper in common usage, which are illustrated in Figures 5 and 6 of US 5,327,706. Figure 5 ofUS 5,327,706 illustrates a satellite-type bale wrapper in which the bale is rotated about a horizontal axis while the film dispenser rotates about a vertical axis around the bale. Figure 6 of US 5,327,706 illustrates a turntable-type bale wrapper apparatus in which the bale is located on a turntable that rotates about a vertical axis while at the same time rotating the bale about a horizontal axis, thereby applying film to the outer surface of the bale from a stationary film dispenser.

The present invention is concerned mainly with bale wrappers of the satellite-type, although certain aspects of the invention are also applicable to turntable-type bale wrappers.

US 6679035 describes a bale wrapping implement according to the preamble of claim 1 having a main frame supported on a caster wheel. The main frame is pivotally coupled to a large round baler so that the wrapping implement can follow the contour of the ground. An auxiliary support wheel is mounted to the main frame so that it engages the ground only when the bale wrapping device is supporting a bale. The main frame includes first and second components that are pivotally coupled to each other. A linkage including a hydraulic actuator is coupled so that a pair of parallel rolls carried by the second component are disposed in a location close to the discharge gate of the baler for receiving a bale when the actuator is extended and are located remote from the gate in a position for wrapping the bale, when the actuator is retracted

Another bale wrapping machine of the satellite type is shown in GB 2275037. This machine discloses the preamble of claim 8 and includes two sets of rollers that may be driven in different ways to lift a bale from the ground, rotate the bale about a horizontal axis during wrapping, and then deposit the wrapped bale on the ground. The rollers are mounted on arms that are attached to a wheeled chassis. The arms can pivot to adjust the separation of the two sets of rollers in order to lift, support and deposit the bale. WO9844776A and US 5,327,706 both describe somewhat similar bale wrapping machines.

When wrapping a rectangular bale, each set of rollers pivots about the ann to accommodate the changing profile of the rotating bale. This is illustrated for example in Figure 3 of US 5,327,706. To avoid breaking of the film and/or fouling the rollers or the mounting/drive structures for the rollers, the film dispenser must be located at all times above the height of the rollers, so that the film is applied only to the part of the bale that extends above the rollers. This gives rise to certain problems.

Ideally, during wrapping, the film is applied to the middle of the bale (at approximately half its height) for optimal stretching and good air-tightness, However, to achieve this, the two sets of rollers must be brought close together to lift the bale high above the rollers. This affects the stability of the bale, which can then be pulled or thrown off the rollers by the tension in the wrapping film.

If, for greater stability, the rollers are spaced further apart so that the bale sits deeper between the rollers, a narrower film must be used to achieve optimal wrapping. The wrapping process then takes longer and more film may be required to achieve the same degree of air-tightness.

It is an object of the present invention to provide a bale wrapper apparatus that mitigates at least some of the aforesaid disadvantages.

According to one aspect of the present invention there is provided a bale wrapper apparatus including a bale support assembly that includes means for rotating a bale about a substantially horizontal first axis, a film dispenser for dispensing film onto the bale, and means for causing relative rotation between the bale support assembly and the film dispenser about a second axis that is substantially perpendicular to the first axis, wherein the bale support assembly includes at least two roller assemblies for supporting and rotating a bale; characterised in that each roller assembly includes at least one roller having cantilevered outer portions at both ends thereof.

Because the end of the cantilevered outer portion of the roller is free and is not connected to a bulky support or drive mechanism, we have found that even if the wrapping film does come into contact with the end of the roller it is immediately transferred onto the bale by rotation of the roller. Breakage of the film is thus avoided. As a consequence, it is possible to use a wide film. Economy and speed of wrapping is thereby improved, as is the air-tightness of the wrapped bale, while problems with the stability of the bale are avoided.

Advantageously, said at least one roller is supported by a support element located approximately at the mid-point of the roller. Preferably, said roller is supported by a single support element. Supporting the roller at only one location in the middle of the roller allows the support mechanism to be much smaller, thereby saving cost and weight.

Advantageously, said support element includes a drive mechanism for rotating the roller.

Advantageously, each cantilevered outer portion has a convex end profile. This helps to ensure that if the wrapping film comes into contact with the end of the roller, it is immediately transferred onto the bale by rotation of the roller.

Advantageously, each roller assembly includes at least two rollers comprising in use an upper roller and a lower roller. Preferably, the lower roller extends beyond the upper roller at least at one end thereof. More preferably, the lower roller extends beyond the upper roller at both ends thereof. Reducing the length of the upper roller means that they do not obstruct the passage of the wrapping film to the same extent as the full length rollers of prior art bale wrappers. This allows a wider film to be used. The stability of the bale is however ensured by the full length lower rollers.

According to another aspect of the present invention there is provided a bale wrapper apparatus including a bale support assembly that includes means for rotating a bale about a substantially horizontal axis, a film dispenser for dispensing film onto the bale, and means for causing relative rotation about a substantially vertical axis between the bale support assembly and the film dispenser, wherein the bale support assembly includes at least two roller assemblies for supporting and rotating a bale and each roller assembly includes at least two rollers comprising in use an upper roller and a lower roller; characterised in that said lower roller extends beyond said upper roller at least at one end thereof.

Because the upper rollers have a reduced length, they do not obstruct the passage of the wrapping film to the same extent as the full length rollers of prior art bale wrappers. This allows a wider film to be used without compromising the stability of the bale.

Advantageously, said lower roller extends beyond said upper roller at both ends thereof.

Advantageously, each roller assembly includes at least one roller having a cantilevered outer portion at least at one end thereof. Preferably, each roller assembly includes at least one roller having cantilevered outer portions at both ends thereof.

Advantageously, each cantilevered outer portion has a convex end profile.

Advantageously, at least one of said rollers is supported by a support element located approximately at the mid-point of the roller. Advantageously, at least one of said rollers is supported by a single support element. Advantageously, said support element includes a drive mechanism for rotating the roller.

Advantageously, at least one said roller assembly includes a support mechanism that may be actuated to adjust the separation of the roller assemblies. Preferably, said support mechanism is constructed and arranged to adjust the separation of the roller assemblies in a substantially horizontal direction. Preferably, said support mechanism includes a four-bar linkage. The four-bar linkage allows the roller assemblies to be driven substantially horizontally into engagement with the bale in order to lift it, which means that the bale can be supported in a position that is rather lower than in the prior art. Accordingly the overall height of the bale wrapper apparatus can be reduced.

Advantageously, the bale wrapper apparatus includes a wheel frame comprising a portal that extends over the bale support assembly. Preferably, said portal is located approximately centrally over the bale support assembly. Preferably, the wheel frame includes an adjustment mechanism that may be actuated to adjust the width of said portal. This allows the width of the portal to be reduced for transit, for example along narrow roads and lanes.

An embodiment of the invention will now be described by way of example with reference to the accompanying drawings, in which:
Figure 1 is a perspective view showing the front and right-hand side of a bale wrapper apparatus;
Figure 2 is an elevation showing the right-hand side of the bale wrapper apparatus;
Figure 3 is a perspective view showing the rear and underside of the apparatus;
Figure 4 is a rear elevation of the apparatus;
Figure 5 shows the underside of the apparatus;
Figure 6 shows a bale support assembly of the apparatus at an enlarged scale from above;

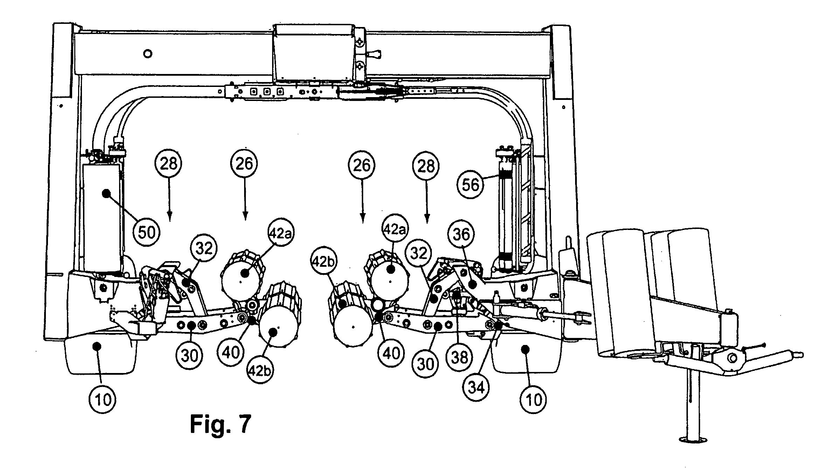

Figure 7 shows the bale support assembly from the front;
Figure 8 shows the bale support assembly from the front during a wrapping operation, and
Figure 9 shows the bale support assembly during a bale wrapping operation from the right-hand side.

The bale wrapper apparatus, which is indicated generally by the reference number 2, includes an arch-shaped wheel frame 4 in the form of a portal having a cross-beam 6 and two side stanchions 8a,8b, each of which is supported by a wheel 10. The cross-beam 6 is in two parts that are connected telescopically, allowing the width of the portal to be reduced for road transit. A tow bar12 is connected to the left-side stanchion 8b by a pivot 14. The angle of the tow bar 12 relative to the frame 4 can be adjusted by means of a hydraulic cylinder 16, so that the bale wrapper apparatus can be towed either directly behind a tractor or displaced to one side thereof. The tow bar 12 also includes a retractable leg 18 and carriers for spare reels of wrapping film 20.

The bale wrapper apparatus includes a bale support assembly indicated generally by the reference number 22 for supporting and rotating an agricultural bale 24. In this example a rectangular bale is shown. It will be understood however that the bale wrapper apparatus may also be used to wrap bales of different shapes. The bale support assembly 22 includes a pair of roller assemblies 26, each of which is connected to one of the side stanchions 8a,8b by a respective swing arm assembly 28. Each swing arm assembly 28 comprises a four-bar linkage that includes a lower swing arm 30, which is connected by two parallel pivot links 32,34 to a support member 36 that is attached to the respective side stanchion 8a,8b. This swing arm assembly 28 allows the respective roller assembly to be moved inwards and outwards substantially parallel to the ground (that is, substantially horizontally). Movement of the swing arm assembly 28 is controlled by a hydraulic actuator 38 (not shown in all the drawings).

Each roller assembly 26 includes a support element 40 that supports a pair of rotatable rollers, comprising in use an upper roller 42a and a lower roller 42b. Hydraulic drive motors (not shown) are provided for driving each pair of rollers independently in a clockwise or anti-clockwise direction.

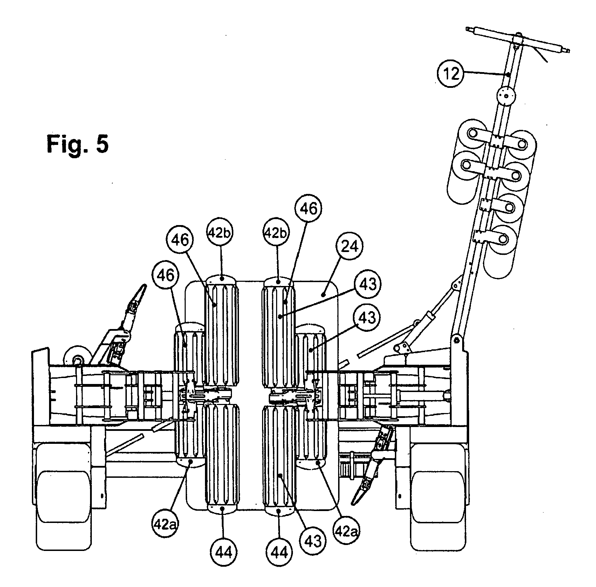

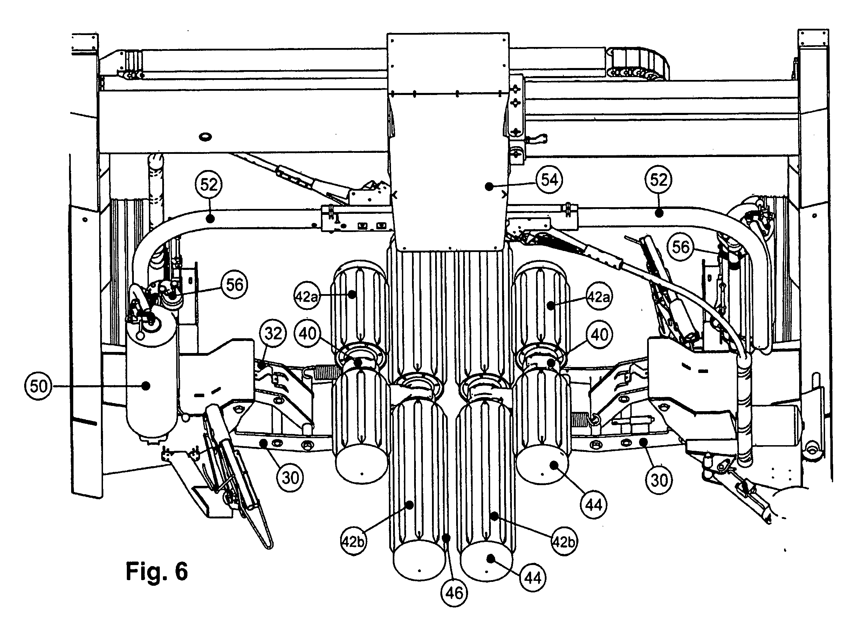

As shown most clearly in Figures 5 and 6, each roller 42a,42b is supported at its mid point by the roller support element 40. The outer portions 43 of each roller 42a,42b are therefore cantilevered, the ends 44 of the roller being free. The ends 44 of each roller are convex or dome-shaped in profile and a plurality of elongate splines 46 are provided on the cylindrical surface of the roller to provide good traction with a supported bale.

The bale wrapper apparatus includes a pair of dispensers 50 for wrapping film. Each dispenser 50 is mounted on the end of an arm 52 that is rotatably attached to a dispenser drive mechanism 54 mounted on the cross-beam 6. Associated with each dispenser 50 is a film pre-tensioner mechanism 56. These dispenser and pre-tensioner mechanisms are conventional and they will not therefore be described in detail.

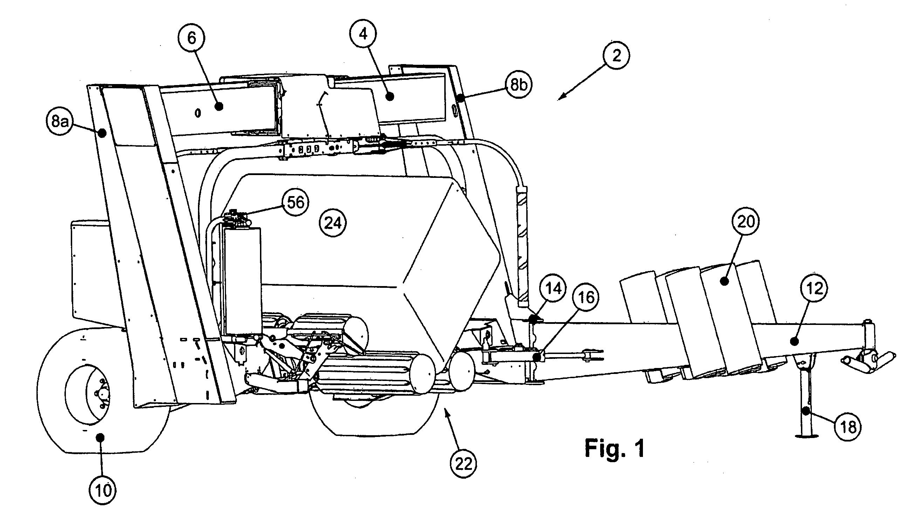

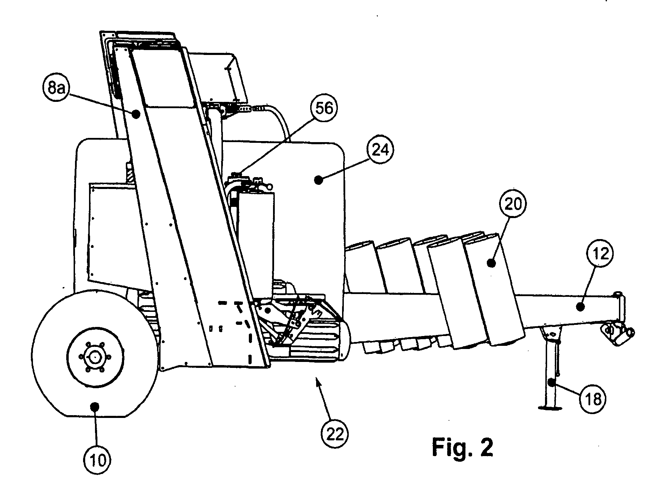

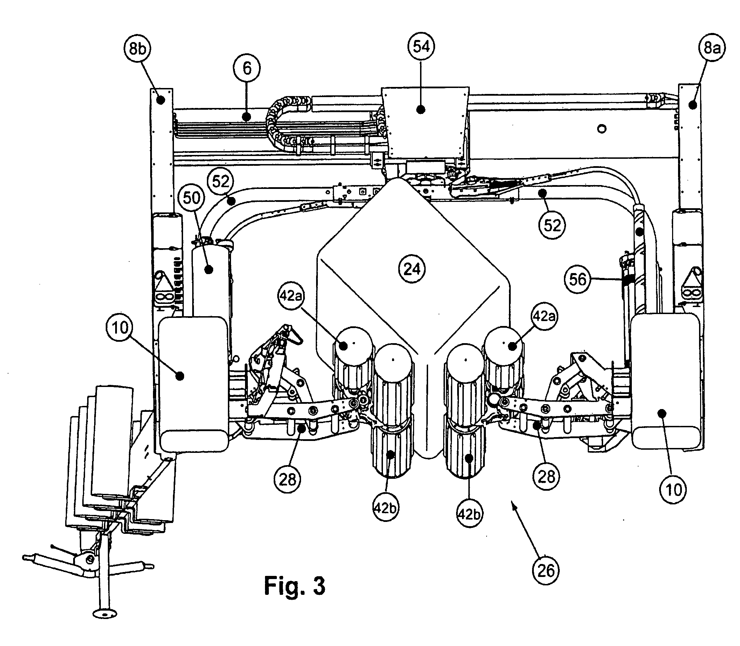

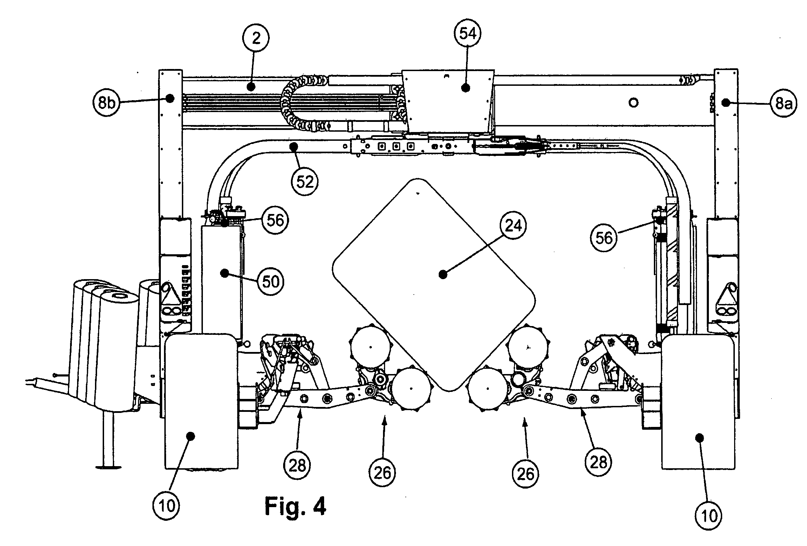

In order to wrap a bale 24, the bale wrapper apparatus 2 is first drawn up to the bale so that the frame 4 straddles the bale. The swing arm assemblies 28, which are initially retracted outwards, are then moved inwards so that the roller assemblies 26 engage the sides of the bale 24. The rollers 42a,42b are then rotated by the hydraulic motors so that the inner portion of each roller rotates upwards, thereby lifting the bale 24. At the same time, the swing arm assemblies 28 are moved further inwards, so that the roller assemblies 26 then support the bale 24, as shown in Figures 1 to 5.

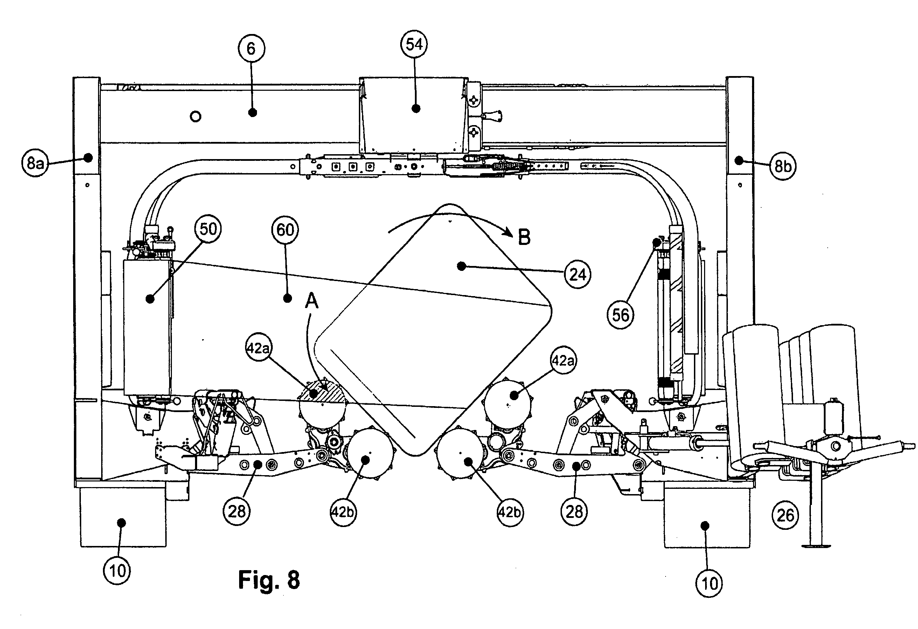

Once the bale has been lifted to this supported position, the ends of the film 60 are drawn from the dispensers 50 and attached to the bale 24. The rollers 42a,42b are all then rotated in the same direction (clockwise or anti-clockwise), causing the bale 24 to rotate about a substantially horizontal axis, as indicated in Figure 8 by arrow B. At the same time, the dispensers 50 rotate about the vertical axis of the dispenser drive mechanism 54, thereby applying a series of overlapping layers of film to the surface of the bale. This continues until the entire surface of the bale has been wrapped with one or more layers of film.

Once wrapping has been completed, the film 60 is severed and the swing arm assemblies 28 are withdrawn outwards to deposit the wrapped bale on the ground. The process is then repeated with subsequent bales.

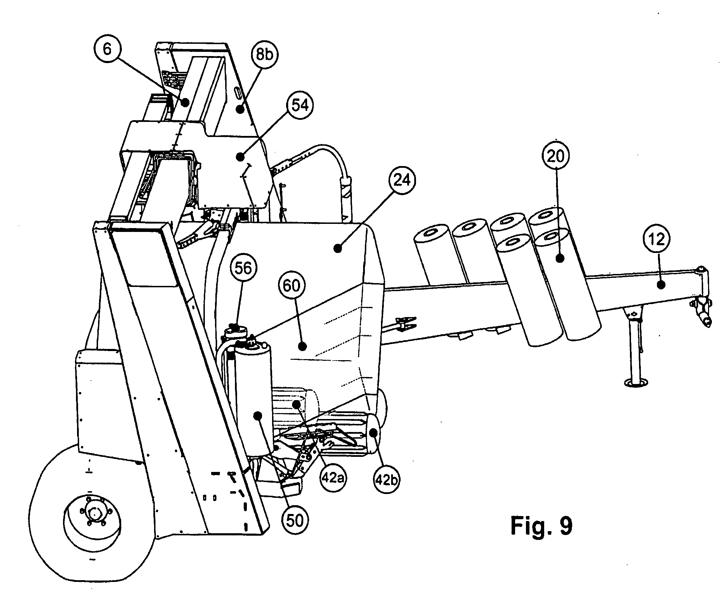

It will be noted from Figures 8 and 9 that the wrapping film 60 is applied to the middle of the bale 24, at approximately half its height, and the film is relatively wide. This enables the wrapping operation to be completed rapidly with economical use of film and good air-tightness. It can also be seen that the bale 24 is supported in a relatively low position between the roller assemblies 26, thereby providing good bale stability. This ideal situation is achieved owing to the novel features of the roller assemblies, as will now be described.

Two important novel features of the roller assembly are as follows:
1. the upper rollers 42a are shorter than the lower rollers 42b, and
2. the outer portions of the rollers are cantilevered so that the ends of the rollers are free; that is, they are not connected to external supports or drive mechanisms.

These features provide a number of important benefits. First, because the upper rollers have a reduced length, they do not obstruct the passage of the wrapping film to the same extent as the full length rollers of prior art bale wrappers, for example as disclosed in US 5,327,706. The stability of the bale is however ensured by the full length lower rollers 42b.

Second, because the ends of the rollers are free and are not connected to bulky support and drive mechanisms as disclosed in the prior art, we have found that even if the wrapping film does come into contact with the end of the roller it is immediately transferred onto the bale by rotation of the roller. This process is aided by the rounded ends of the rollers. Breakage of the film is thus avoided.

As a consequence, it is possible to use a wide film 60, which can even slightly overlap one or more of the rollers, as indicated at A in Figure 8. Economy and speed of wrapping is thereby improved, as is the air-tightness of the wrapped bale, while avoiding problems with the stability of the bale.

In addition, by supporting the rollers at only one location in the middle of each roller, the support mechanism can be made much smaller and lighter, thereby saving cost and weight. Furthermore, the four-bar linkage used in each swing arm assembly 28 allows the roller assemblies 26 to be driven substantially horizontally into engagement with the bale in order to lift it, which means that the bale can be supported in a position that is rather lower than in the prior art. Accordingly the overall height of the bale wrapper apparatus can be reduced. Finally, the telescopic cross-beam 6 of the wheel frame 4 allows the width of the portal to be reduced for transit, for example along narrow roads and lanes.

Various modifications of the invention are of course possible. For example, features of the invention can be applied to either a satellite-type bale wrapper as shown in the drawings, or to a turntable-type bale wrapper in which the bale is located on a turntable that rotates about a vertical axis while at the same time rotating the bale about a horizontal axis. The bale wrapper can also be arranged so that the bale rotates about a first axis and the dispenser rotates about a second axis that is substantially perpendicular to the first axis, where the first axis and the second axis are both substantially horizontal, or where one or both axes are inclined relative to the horizontal. The invention may also be embodied either in a dedicated bale wrapper apparatus or a combined baler and wrapper machine.

## Claims

1. A bale wrapper apparatus including a bale support assembly (22) that includes means (42a,b) for rotating a bale (24) about a substantially horizontal first axis, a film dispenser (50) for dispensing film onto the bale, and means (54) for causing relative rotation between the bale support assembly and the firm dispenser about a second axis that is substantially perpendicular to the first axis, wherein the bale support assembly (22) includes at least two roller assemblies (26) for supporting and rotating a bale; **characterised in that** each roller assembly (26) includes at least one roller (42a,b) having cantilevered outer portions (43) at both ends thereof.

2. A bale wrapper apparatus according to claim 1, wherein said at least one roller (42a,b) is supported by a support element (40) located approximately at the mid-point of the roller.

3. A bale wrapper apparatus according to any one of the preceding claims, wherein said at least one roller (42a,b) is supported by a single support element (40).

4. A bale wrapper apparatus according to claim 2 or claim 3, wherein said support element (40) includes a drive mechanism for rotating the roller.

5. A bale wrapper apparatus according to any one of the preceding claims, wherein each cantilevered outer portion (43) has a convex end profile (44).

6. A bale wrapper apparatus according to any one of the preceding claims, wherein each roller assembly (26) includes at least two rollers (42a,b) comprising in use an upper roller (42a) and a lower roller (42b).

7. A bale wrapper apparatus according to claim 6, wherein said lower roller (42b) extends beyond said upper roller (42a) at least at one end thereof.

8. A bale wrapper apparatus including a bale support assembly (22) that includes means for rotating a bale (24) about a substantially horizontal axis, a film dispenser (50) for dispensing film onto the bale (24), and means (54) for causing relative rotation about a substantially vertical axis between the bale support assembly and the film dispenser, wherein the bale support assembly (22) includes at least two roller assemblies (26) for supporting and rotating a bale and each roller assembly (26) includes at least two rollers comprising in use an upper roller (42a) and a lower roller (42b); **characterised in that** said lower roller (42b) extends beyond said upper roller (42a) at least at one end thereof.

9. A bale wrapper apparatus according to claim 9, wherein said lower roller extends beyond said upper roller at both ends thereof.

10. A bale wrapper according to claim 8 or claim 9, further including the characterising features of any one of claims I to 7.

11. A bale wrapper apparatus according to any one of the preceding claims, wherein at least one said roller assembly (26) includes a support mechanism (22) that maybe actuated to adjust the separation of the roller assemblies.

12. A bale wrapper apparatus according to claim 11, wherein said support mechanism (22) is constructed and arranged to adjust the separation of the roller assemblies (26) in a substantially horizontal direction.

13. A bale wrapper apparatus according to claim 11 or claim 12, wherein said support mechanism (22) includes a four-bar linkage.

14. A bale wrapper apparatus according to any one of the preceding claims, including a wheel frame (4) comprising a portal that extends over the bale support assembly.

15. A bale wrapper apparatus according to claim 14, wherein the wheel Game (4) includes an adjustment mechanism that may be actuated to adjust the width of said portal.

## Patentansprüche

1. Ballenwickelvorrichtung mit einer Ballenstützanordnung (22), die Mittel (42a,b) zum Drehen eines Ballens (24) um eine im Wesentlichen horizontale erste Achse einschliesst, einem Folienspender (50) zur Abgabe von Folie auf den Ballen, und Mittel (54) zum Bewirken einer relativen Drehung zwischen der Ballenstützanordnung und dem Folienspender um eine zweite Achse, die im Wesentlichen senkrecht zu der ersten Achse ist, wobei die Ballenstützanordnung (22) wenigstens zwei Rollenanordnungen (26) zum Stützen und Drehen eines Ballens einschliesst; **dadurch gekennzeichnet, dass** jede Rollenanordnung (26) wenigstens eine Rolle (42a, b) mit auskragenden Außenteilen (43) an beiden Enden davon einschliesst.

2. Ballenwickelvorrichtung nach Anspruch 1, wobei die wenigstens eine Rolle (42a, b) durch ein etwa am Mittelpunkt der Rolle angeordnetes Stützelement (40) abgestützt ist.

3. Ballenwickelvorrichtung nach einem der vorhergehenden Ansprüche, wobei die wenigstens eine Rolle (42a, b) durch ein einziges Stützelement (40) abgestützt ist.

4. Ballenwickelvorrichtung nach Anspruch 2 oder Anspruch 3, wobei das Stützelement (40) einen Antriebsmechanismus zum Drehen der Rolle einschliesst.

5. Ballenwickelvorrichtung nach einem der vorhergehenden Ansprüche, wobei jedes auskragende Außenteil (43) ein konvexes Abschlussprofil (44) hat.

6. Ballenwickelvorrichtung nach einem der vorhergehenden Ansprüche, wobei jede Rollenanordnung (26) wenigstens zwei Rollen (42a, b) einschliesst, die im Gebrauch eine obere Rolle (42a) und eine untere Rolle (42b) umfassen.

7. Ballenwickelvorrichtung nach Anspruch 6, wobei die untere Rolle (42b) wenigstens an einem Ende davon sich über die obere Rolle (42a) erstreckt.

8. Ballenwickelvorrichtung mit einer Ballenstützanordnung (22), die Mittel (42a,b) zum Drehen eines Ballens (24) um eine im Wesentlichen horizontale Achse einschliesst, einem Folienspender (50) zur Abgabe von Folie auf den Ballen (24), und Mittel (54) zum Bewirken einer relativen Drehung zwischen der Ballenstützanordnung und dem Folienspender um eine im Wesentlichen vertikale Achse, wobei die Ballenstützanordnung (22) wenigstens zwei Rollenanordnungen (26) zum Stützen und Drehen eines Ballens einschliesst und jede Rollenanordnung (26) wenigstens zwei Rollen einschliesst, die im Gebrauch eine obere Rolle (42a) und eine untere Rolle (42b) umfassen; **dadurch gekennzeichnet, dass** die untere Rolle (42b) wenigstens an einem Ende davon sich über die obere Rolle (42a) erstreckt.

9. Ballenwickelvorrichtung nach Anspruch 9, wobei die untere Rolle sich an beiden Enden davon über die obere Rolle erstreckt.

10. Ballenwickler nach Anspruch 8 oder Anspruch 9, der ferner die kennzeichnenden Merkmale nach einem der Ansprüche 1 bis 7 einschliesst.

11. Ballenwickelvorrichtung nach einem der vorhergehenden Ansprüche, wobei wenigstens eine Rollenanordnung (26) einen Stützmechanismus (22) einschliesst, der betätigt werden kann, um die Trennung der Rollenanordnungen einzustellen.

12. Ballenwickelvorrichtung nach Anspruch 11, wobei der Stützmechanismus (22) aufgebaut und angeordnet ist, um die Trennung der Rollenanordnungen (26) in einer im Wesentlichen horizontalen Richtung einzustellen.

13. Ballenwickelvorrichtung nach Anspruch 11 oder Anspruch 12, wobei der Stützmechanismus (22) ein Viergelenk einschliesst.

14. Ballenwickelvorrichtung nach einem der vorhergehenden Ansprüche, mit einem Radgestell (4), das ein Portal umfasst, das sich über die Ballenstützanordnung erstreckt.

15. Ballenwickelvorrichtung nach Anspruch 14, wobei das Radgestell (4) einen Einstellmechanismus einschliesst, der betätigt werden kann, um die Breite des Portals einzustellen.

## Revendications

1. Lieuse de balles comprenant un support de balles (22) incluant des moyens (42 a, b) assurant la rotation d'une balle (24) sur un premier axe essentiellement horizontal, un distributeur de film (50) pour l'enveloppement de la balle dans un film, et des moyens (54) générant une rotation relative entre le support de balles et le distributeur de film sur un second axe essentiellement perpendiculaire au premier axe, dans lequel le support de balles (22) comprend au moins deux assemblages de rouleaux (26) destinés à supporter et imposer une rotation à une balle ; **caractérisé en ce que** chaque assemblage de rouleaux (26) comprenne au moins un rouleau (42 a, b) ayant positionné en porte-à-faux les parties externes (43) situées aux deux extrémités de celui-ci.

2. Lieuse de balles selon la revendication 1, dans laquelle il est dit qu'au moins un rouleau (42 a, b) est soutenu par un élément de support (40), positionné approximativement au point médian du rouleau.

3. Lieuse de balles selon l'une quelconque des revendications précédentes, dans laquelle il est dit qu'au moins un rouleau (42 a, b) est soutenu par un élément de support unique (40).

4. Lieuse de balles selon la revendication 2 ou 3, dans laquelle il est dit qu'un élément de support (40) comprenne un mécanisme d'entraînement pour la rotation du rouleau.

5. Lieuse de balles selon l'une quelconque des revendications précédentes dans laquelle il est dit qu'une partie externe en porte-à-faux (43) a un profil d'extrémité convexe (44).

6. Lieuse de balles selon l'une quelconque des revendications précédentes, dans laquelle chaque assemblage de rouleaux (26) inclut au moins deux rouleaux (42 a, b) recourant à l'utilisation d'un rouleau supérieur (42a) et d'un rouleau inférieur (42b).

7. Lieuse de balles selon la revendication 6, dans laquelle il est dit que le rouleau inférieur (42b) se prolonge au-delà dudit rouleau supérieur (42a) au moins à une extrémité de celui-ci.

8. Lieuse de balles comprenant un assemblage de support de balles (22) constitué de moyens permettant la rotation d'une balle (24) sur un axe essentiellement horizontal, d'un distributeur de film (50) pour la disposition du film sur la balle (24) et de moyens (54) produisant la rotation relative sur un axe essentiellement vertical positionné entre l'assemblage de support de balle et le distributeur de film, dans lequel l'assemblage de support de balles (22) comprend au moins deux assemblages de rouleaux (26) pour soutenir et imposer une rotation à la balle et chaque assemblage de rouleaux (26) comprend au moins deux rouleaux recourant à l'utilisation d'un rouleau supérieur (42a) et d'un rouleau inférieur (42b) ; **caractérisé en ce que** ledit rouleau inférieur (42b) se prolonge au-delà dudit rouleau supérieur (42a) au moins à une extrémité de celui-ci.

9. Lieuse de balles selon la revendication 9, dans laquelle ledit rouleau inférieur se prolonge au-delà dudit rouleau supérieur aux deux extrémités de celui-ci.

10. Lieuse de balles selon la revendication 8 ou la revendication 9, comprenant en outre les fonctions de caractérisation d'une quelconque des revendications 1 à 7.

11. Lieuse de balles selon l'une quelconque des revendications précédentes, dans laquelle au moins un assemblage de rouleaux susmentionné (26) comprend un mécanisme de support (22) qui peut être actionné pour pallier la séparation des assemblages de rouleaux.

12. Lieuse de balles selon la revendication 11, dans laquelle dans lequel ledit mécanisme de support (22) est fabriqué et positionné de façon à pallier la séparation des assemblages de rouleaux (26) dans une direction essentiellement horizontale.

13. Lieuse de balles selon la revendication 11 ou la revendication 12, dans laquelle ledit mécanisme de support (22) comprend un quadrilatère articulé.

14. Lieuse de balles selon l'une quelconque des revendications précédentes, qui comprend un châssis à roue (4) constitué d'un portique s'étendant sur l'assemblage de support de balles.

15. Lieuse de balles selon la revendication 14, dans lequel le châssis à roue (4) comprend un mécanisme de réglage qui peut être actionné pour s'ajuster à la largeur dudit portique.
